# EUROPEAN PATENT SPECIFICATION

(11) **EP 0 626 561 B1**
(45) Date of publication and mention of the grant of the patent: **20.08.1997**
(21) Application number: 93924808.4
(22) Date of filing: 11.11.1993
(51) Int. Cl.: G01C 5/02, G01C 9/20, G01C 15/00, G02B 27/64

(54) **AUTOMATIC INCLINATION ANGLE COMPENSATOR**
AUTOMATISCHER NEIGUNGSWINKELKOMPENSATOR
DISPOSITIF DE COMPENSATION AUTOMATIQUE D'UN ANGLE D'INCLINAISON

(30) Priority: 12.11.1992 JP 327291/92; 12.11.1992 JP 327293/92
(43) Date of publication of application: 30.11.1994
(73) Proprietor: KABUSHIKI KAISHA TOPCON, Tokyo 174 (JP)
(72) Inventor: OHTOMO, Fumio, Kabushiki Kaisha Topcon, Tokyo 174 (JP); SUGAI, Hiroo, Kabushiki Kaisha Topcon, Tokyo 174 (JP); ISHINABE, Ikuo, Kabushiki Kaisha Topcon, Tokyo 174 (JP); YAMAZAKI, Takaaki, Kabushiki Kaisha Topcon, Tokyo 174 (JP); KODAIRA, Junichi, Kabushiki Kaisha Topcon, Tokyo 174 (JP)
(74) Representative: Maggs, Michael Norman
(86) International application number: PCT/JP93/01645
(87) International publication number: WO 94/11704

(56) References cited:
- EP-A- 0 161 207
- EP-A- 0 302 821
- EP-A- 0 308 162
- JP-A- 1 158 311
- JP-B-45 004 208
- BRITISH JOURNAL OF PHOTOGRAPHY, vol.119, no.5837, 2 June 1972, LONDON GB pages 478 - 479 D.KEELING 'Optical Design and Aberrations'
- PATENT ABSTRACTS OF JAPAN vol. 10, no. 72 (P-438) (2129) 22 March 1986 & JP-A-60 210 709 (TOUKIYOU KOUGAKU KIKAI K.K.) 23 October 1985
- TECHNISCHE RUNDSCHAU, vol.83, no.42, 18 October 1991, BERN CH page 84, XP266925 ANONYMOUS 'Die elektronische Wasserwaage'

## Description

The present invention relates to an automatic tilt angle compensator for use for example in a surveying instrument, a measuring instrument or the like; preferably for measuring tilt changes or for maintaining an optical axis of the instrument in a vertical direction.

When a surveying instrument, a measuring instrument or the like is used for surveying purposes, it is necessary to make compensation for the reference plane of the surveying or measuring instrument or to compensate for the verticality of an optical axis.

In the past, compensation has automatically been performed as follows: a pendulum comprising a lens or a prism is suspended by two or three suspension lines. When a main unit of the surveying or measuring instrument is tilted, the pendulum is damped by a damping device such as a magnetic damping mechanism to automatically compensate the optical path.

As one of the methods to detect tilting of a reference plane of a main unit of the surveying or measuring instrument, reflection on a free liquid surface may be utilized.

In this method, a light beam is shone onto the free liquid surface, and the change of an optical axis of the reflected light is detected by a photodetector. When mercury is used as the liquid with the free liquid surface, and the light beam is shone perpendicularly onto the surface, it is possible to obtain a reflection angle having the same sensitivity to tilting of the liquid surface in all two-dimensional directions. Tilting of the reference plane in any direction can accordingly be detected.

However, liquids such as mercury are not very practical to use, either in terms of cost or of safety, and a transparent liquid such as silicone oil is used in practical application. When a transparent liquid is used, total reflection is utilized for the purpose. Because of the critical angle between liquid and air, in order to achieve total reflection of the light beam on the liquid surface, it is necessary to shine the light beam onto the free liquid surface at an incident angle θ which matches this critical angle. In a conventional-type detecting device utilizing a free liquid surface, the light beam is shone onto the free liquid surface at a predetermined angle.

When a light beam is shone onto the free liquid surface at a predetermined angle, the change of reflection angle relating to different biaxial tilting directions with respect to the liquid surface is not uniform. Therefore, in such a device, measures must be taken to deal with this non-uniform change of reflection angle with tilt direction. For this reason, light beams having two different optical axes are normally shone at a predetermined angle onto the free liquid surface, and the reflected light beams are received by separate photodetectors. The light-receiving position for only one direction is detected by each photodetector; and by the change of the light receiving-positions of the photodetectors tilting with respect to the two optical axes may be detected. From the tilting thus detected, tilting of the reference plane of the surveying or measuring instrument or the like to the horizontal is calculated. Compensation is then performed based on the results of the calculation.

In the conventional device described above, moreover, a pendulum is suspended and this leads to a more complicated structure. In addition, suspension of the pendulum during assembly of the device is not easy, and adjustment is not straightforward. Furthermore, the suspension lines tend to change their length over time, and it is therefore very difficult to maintain accuracy. Because a special damping device is required for the pendulum, this also makes the structure more complicated. Finally, the suspension structure of the pendulum is very delicate, and is susceptible to shock.

In the other example of a conventional device, described above, utilising total reflection on a free liquid surface, assembly and adjustment are simple and there is no changeover time because no suspension line is used. Because the liquid is sealed within a closed container, the device has high shock-resistance and also has a high resistance to adverse environmental conditions. Because a liquid is used, damping can automatically be performed by making use of the viscosity of the liquid, and no separate damping device is required. Thus, the difficulties mentioned above which are inherent in devices which use a pendulum have largely been overcome by the use of devices utilising a free liquid surface.

However, because light beams having two different optical axes are shone on the free liquid surface at different predetermined angles, provision must be made for two separate optical projection systems, and this leads to a more complex structure.

It is an object of the present invention at least to alleviate the problems of the prior art free liquid surface devices.

Accordingly, the compensator of the present invention detects tilting of the reference plane, or performs automatic compensation of verticality, by making us of monoaxial optical systems only. This is done by making use of total reflection from the free liquid surface.

According to the present invention there is provided an automatic tilt angle compensator, comprising a container having within it a transparent liquid having a free liquid surface, light projection means for projecting an incident light beam along an incident axis towards the free liquid surface so that the light beam is totally reflected therefrom along a reflected axis; and an optical system arranged in the optical path of the reflected beam; the compensator being characterised in that the optical system acts on the reflective beam differentially in mutually perpendicular directions to substantially equalise the sensitivity of the reflected beam, measured by amount of angular deviation from the reflected axis, to a small angular deviation of the incident light beam in any direction from the incident axis.

According to a further aspect of the invention there is provided a tilt angle automatic compensator, comprising a container where a transparent liquid to form free liquid surface is sealed, a light projection system for projecting light beam toward the free liquid surface at a predetermined angle so that it is totally reflected on the free liquid surface, and an optical system arranged at a predetermined position along optical path of the totally reflected light beam after passing through the container with sealed liquid and for equalizing change of reflection angle of an optical axis corresponding to change of incident angle of an optical axis in all directions.

According to yet a further aspect of the invention there is provided a tilt angle automatic compensator, comprising a container where a transparent liquid to form free liquid surface is sealed, a light projection system for projecting light beam towards the free liquid surface at a predetermined angle so that it is totally reflected on the free liquid surface, a mirror for reflecting the light beam reflected on the free liquid surface in vertical direction, and an optical system arranged at a predetermined position along an optical path of the reflected light beam and for equalizing change of reflection angle of optical axis corresponding to change of incident angle of optical axis in all directions and for offsetting angular change of the reflected optical axis corresponding to change of incident angle of optical axis.

In the above arrangements, even when the free liquid surface is tilted with respect to the incident light beam (in any direction) compensation is made to equalise the change of incident angle and the change of reflection angle. Accordingly, the angle of tilt of the entire instrument can be automatically determined or compensated for according to the change of reflection angle, and this can be utilized for automatic compensation of surveying instruments or other instruments or devices requiring a horizontal or a vertical line or plane of reference.

The compensator preferably includes a container having sealed therein the transparent liquid to form a free liquid surface. The light projection system projects an incident light beam onto the free liquid surface, from below, at a given angle so that total reflection (total internal reflection) occurs on the free liquid surface. A mirror is preferably also provided for further reflecting the light beam which has been reflected from the free liquid surface into a vertical direction. There may also be an optical system arranged at a predetermined position within the optical path of the reflected light beam which equalises the change of reflection angle so that any small angular deviation of the incident light beam (in any direction) from the incident axis always produces the same angular deviation of the reflected beam. There may, in addition, be means provided for automatically keeping the reflected light beam in the vertical direction. Thus, even when the relative angle between the free liquid surface and the incident light beam changes, the angular change in the reflected light beam is optically offset so that the light beam is always maintained in a vertical direction. The vertical light beam can then be used as a vertical reference in surveying.

It is also possible to form a horizontal reference line or a horizontal reference plane using a horizontal light beam. Means may be provided for converting the vertical reflected light beam into a horizontal light beam (for example by way of reflection). Means may also be provided whereby the horizontal light beam may be rotated about a vertical axis, to define a horizontal reference plane.

A telescope system may be arranged within the incident light beam, so that the entire device may be used to define a vertical reference.

In a further preferred embodiment, a beam splitter such as a semi-silvered mirror is located within the reflected light beam, to cause the reflected light beam to be split up into a first beam and into a second beam. Movement of the first beam, due to a change in the incident angle, is detected by a photodetector. In this way, it is possible to judge that the tilting of the entire device (for example of the surveying instrument) is within a predetermined range. The first beam could either be that beam which has passed through the semi-silvered mirror, or the beam that has been reflected from the semi-silvered mirror.

In order that variations in temperature do not build up in the body of the liquid, the liquid may be maintained in a generally flat configuration, for example within a planar space. The lower surface of the space, or one of the other surfaces, may define a heat transfer plate which promotes thermal dispersion within the liquid and/or thermal transfer to and away from the liquid. In addition, heat insulating means (for example a heat insulating layer) may be provided around the liquid to suppress heat transfer to and from the liquid. As a result, none-uniformity of refractive index is substantially prevented within the body of the liquid, and unwanted refractions of the light beam are minimised.

The invention may be carried into practice in a number of ways, and several specific embodiments will now be described, by way of example, with reference to the accompanying drawings, in which:
Figure 1 shows how the angle of reflection of a reflected light beam changes when a free liquid surface is tilted;
Figure 2 likewise shows how the angle of reflection of a reflected light beam changes when a free liquid surface is tilted;
Figure 3 illustrates the basic configuration of a first embodiment of the present invention;
Figures 4(A) and 4(B) each illustrate changes to an optical axis of a transmitted light beam to a cylindrical lens system in the first embodiment of the invention;
Figures 5(A) and 5(B) illustrate changes in the optical axis of a transmitted light beam to a cylindrical lens system;
Figure 6 shows a basic configuration of a second embodiment of the present invention;
Figures 7(A) and 7(B) illustrate changes in the optical axis of a transmitted light beam to a toric lens expander in the second embodiment;
Figure 8 illustrates a typical application using an embodiment of the present invention;
Figure 9 illustrates another application;
Figure 10 illustrates yet a further application;
Figure 11 illustrates the relationship between a beam spot and a pinhole in still another application;
Figure 12 shows a basic configuration of a third embodiment of the present invention;
Figure 13 illustrates changes to the optical axis of a transmitted light beam to an anamorphic prism system in the third embodiment;
Figures 14(A) and 14(B) illustrate changes to the optical axis of a transmitted light beam to the anamorphic prism system;
Figure 15 shows an illustrative application for use with the third embodiment of the present invention;
Figure 16 illustrates a further application;
Figure 17 illustrates yet another application;
Figure 18 illustrates the relationship between a beam spot and a pinhole in yet another application;
Figure 19 is a cross-section through a preferred form of liquid container;
Figure 20 is a diagram taken along the line A-A of Figure 19; and
Figure 21 is a cross-section through another preferred example of the liquid container.

A detailed description will now be given of the preferred embodiments of the present invention, in connection with the attached drawings.

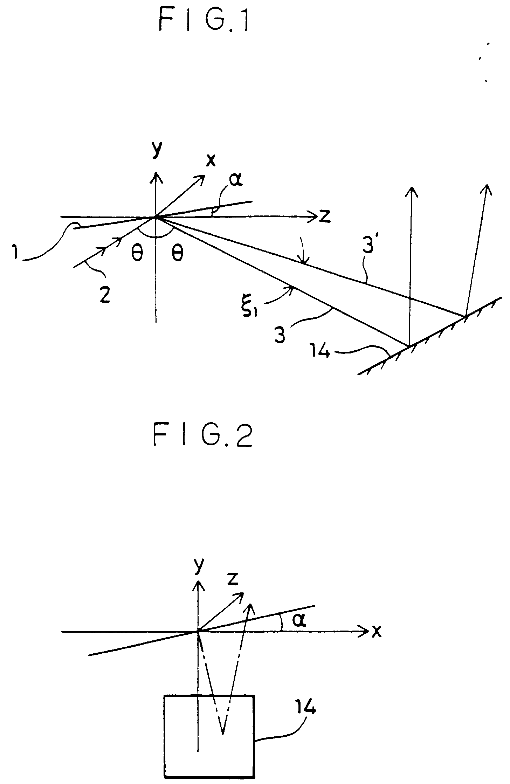

First, referring to Figures 1 and 2, when a light beam is shone onto a free liquid surface at a predetermined angle and the light beam is totally reflected from the surface, it is found that when the surface is tilted relative to the light beam the amount of change in the reflection angle differs according to the direction in which the liquid surface is tilted.

In practical embodiments, the free liquid surface is normally maintained horizontal and the incident direction of the light beam is changed. However, in the following description it will be assumed for the sake of clarity that the incident direction of the light beam is constant and it is the free liquid surface which is tilted. In Figure 1, reference numeral 1 represents a free liquid surface, and it is to be assumed that an incident light beam 2 enters the free liquid surface 1 at an angle θ. It is further assumed that the free liquid surface 1 is approximately aligned in an x-z coordinate plane, with the coordinate axis y being perpendicular to the surface. It will also be assumed that the optical axis of the incident light beam 2 lies in the y-z coordinate plane. When the free liquid surface 1 is tilted about the coordinate axis x by an angle α, the optical axis of the reflected light beam 3 moves within the y-z coordinate plane, the reflection angle being changed within that plane by an amount ξ₁x within the y-z coordinate plane. In this case, the relation between the liquid surface displacement angle α and the reflection displacement angle ξ₁x is expressed by the equation ξ₁ = 2α; there is no reflection displacement angle ξ₂x within the x-y coordinate plane. As will be appreciated, in the Figure the reference numeral 14 represents a mirror.

In contrast, if the free liquid surface 1 is tilted about the coordinate axis z by an angle α shown in Figure 2, the reflected light beam does not lie either in the x-y or in the y-z coordinate plane. Accordingly, one needs to consider both the reflection displacement angle ξ₁z on the x-y plane and the angle ξ₂z on the y-z plane. The relation between the reflection displacement angle ξ₁z and the liquid surface angle α of the free liquid surface 1 is given by the following equations:${\text{ξ}}_{\text{1}} {\text{z = cos}}^{\text{-1}} {\text{(cos}}^{\text{2}} {\text{θ cos2α + sin}}^{\text{2}} \text{θ)} {\text{ξ}}_{\text{2}} {\text{z = π/2 - cos}}^{\text{-1}} \text{((1 - cos2α) sin θ cosθ)}$

For instance, if it is supposed that α = 10' and θ = 50°, ξ₂z = 1.7'', the value ξ₂z is negligible in terms of accuracy. Further, if it is supposed that the refractive index of the liquid is n, the angle of the optical axis after the light beam has passed through the liquid is given by the following equations:${\text{ξ}}_{\text{1}} \text{x' = 2nα} {\text{ξ}}_{\text{2}} {\text{z' = n ' cos}}^{\text{-1}} {\text{(cos}}^{\text{2}} {\text{θ cos 2α + sin}}^{\text{2}} \text{θ )}$

Accordingly, sensitivity with respect to the liquid surface displacement angle α differs between the reflection displacement angle ξ₁x' and the reflection displacement angle ξ₁z'. In the present embodiment, the difference between the sensitivities between the reflection displacement angles ξ₁x' and the ξ₁z' is compensated for and equalized by optical means. As a result, an optical axis is obtained which displays a constant angular rate of change with respect to all directions.

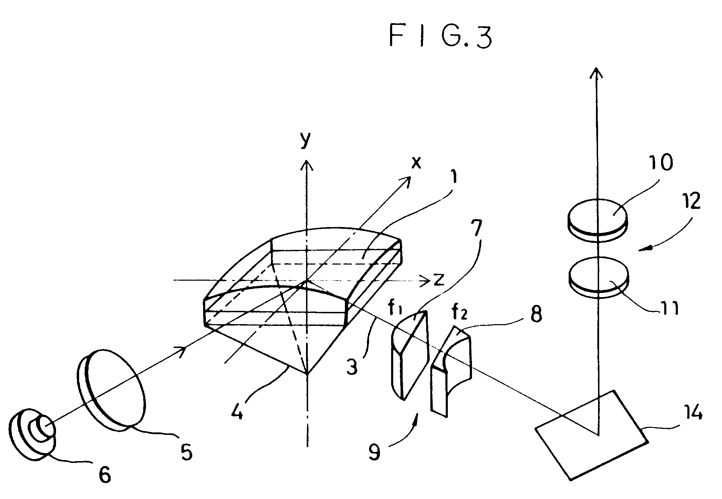

Referring now to Figure 3, a description will be given of a first embodiment of the present invention.

In the Figure, reference numeral 4 represents a container with a liquid sealed within it, provided on a main unit of a device such as a surveying instrument. The liquid sealed in the container 4 presents a free liquid surface 1. A light beam is shone from a light source 6 via a collimator lens 5 onto the free liquid surface 1, at a given angle so that total reflection occurs. The optical axis of the light beam is taken to be in the y-z coordinate plane.

When the free liquid surface 1 is not tilted, a cylindrical lens system 9 having a pair of cylindrical lenses 7,8 and a reflection mirror 14 are arranged along the optical axis of the reflected light beam 3, following its total reflection from the free liquid surface 1. Each of the cylindrical lenses 7,8 has a curvature in only one direction. The cylindrical lens 7 is a convex cylindrical lens having a focal length f₁, and the cylindrical lens 8 is a concave cylindrical lens having a focal length f₂.

The light beam passing through the cylindrical lens system 9 is reflected by the mirror 14 in a vertical direction and through a beam expander 12, comprising convex lenses 10,11. Here, assuming the focal length of the convex lens 10 to be f₃ and the focal length of the convex lens 11 to be f₄, the distance between the convex lens 10 and the convex lens 11 is set to be equal to:
f₃ + f₄.

In an alternative arrangement (not shown) the cylindrical lens system 9 could be arranged along the optical path after reflection by the mirror 14.

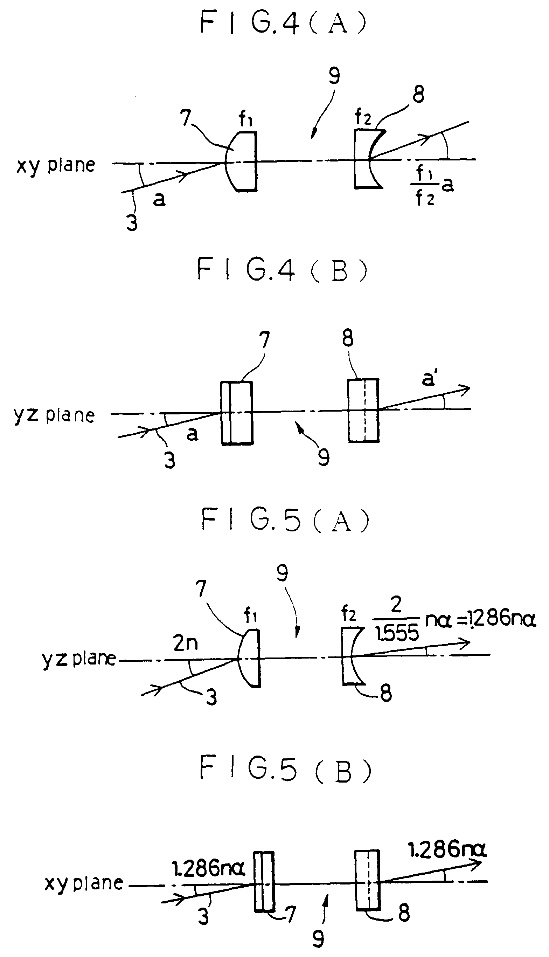

A description will now be given of the way in which the embodiment operates in practice, with reference to Figure 4 (A) and 4 (B) .

In a first case, shown in Figure 4(A) a light beam enters from the direction of the radius of curvature of the cylindrical lens 7. In such a case, the relation between the angle formed by the reflected light beam 3 and the optical axis of the cylindrical lens 7 (that is the incident angle a and exit angle a' from the cylindrical lens 8) is given by the following equation:${\text{a' = (f}}_{\text{1}} {\text{/f}}_{\text{2}} \text{) a}$

Figure 4(B) shows the case in which the light beam enters from a plane which includes the generating line of the curved surface of the cylindrical lens 7. In such a case, the relation between the angles formed by the reflected light beam 3 and the optical axis of the cylindrical lens 7 (that is the incident angle a, and the axis angle a' from the cylindrical lens 8) is given by the following equation:$\text{a = a'}$

Accordingly, where the free liquid surface 1 is tilted about the z-axis, the cylindrical lens system 9 is arranged as is shown in Figure 4(A); where the free liquid surface 1 is tilted around the x-axis, the cylindrical lens system 9 is arranged as is shown in Figure 4 (B) .

To take a specific example, let it be assumed that the beam impinges upon the liquid surface at an incident angle θ of 50°, that the tilt angle of the device (that is the angle α of the free liquid surface 1) is 10', and the refractive index n of the liquid is 1.4. In such a case, when the free liquid surface 1 is tilted about the x-axis the reflection displacement angle ξ₁x' may be determined by equation 2 as 28'; and when the free liquid surface 1 is tilted about the z-axis the reflection displacement angle ξ₁z' becomes 18'. Accordingly, the ratio of sensitivity between the reflection displacement angle ξ₁x' and ξ₁z' is given by: (ξ₁x'/ξ₁z') = 1.555.

Under these conditions, one can derive the following relations:${\text{ξ}}_{\text{1}} \text{x' = 2 nα} {\text{ξ}}_{\text{1}} \text{z' = 1.286 nα}$

Therefore, if (f1/f2) = 2/1.286 from equation (2), the displacement angle ξ₁z' of the optical axis after transmission through the cylindrical lens system 9 is converted to the following: 1.286nα x 2/1.286 = 2 nα.

After passing through the cylindrical lens system 9, therefore, one obtains the relationship: ξ₁x' = ξ₁z'. Thus, in whatever direction the free liquid surface is tilted, the sensitivity of the reflection displacement angle is always the same. This means that the amount of tilting of the free liquid surface can be obtained simply based upon a measurement of the reflection displacement angles. In a practical embodiment, of course, the entire device actually tilts, with respect to the free liquid surface. Thus, using the equations given above the amount of tilting of the entire device can be obtained simply by a measurement of the reflection displacement angles.

To take the analysis one stage further, when the light beam has passed through the cylindrical lens system 9 and is then reflected upward by the reflection mirror 14 through the beam expander 12, and if one takes the angular magnification of the beam expander to be 1/2 n times, the amount of tilt of the optical axis after passing through the beam expander is given by the following equation:${\text{(ξ}}_{\text{1}} {\text{x' = ξ}}_{\text{1}} \text{z' = 2 nα) n/2 = α}$

The final optical axis after passing through the beam expander 12 always runs perpendicular to the free liquid surface 1, in other words it is always maintained in the vertical direction. If the focal length of the convex lens 10 is taken to be f₃ and the focal length of the convex lens is taken to be f₄, the angular magnification of the expander becomes f₃/f₄. By appropriately selecting f₃ and f₄, the angular magnification can be set to 1/2 n.

Next, with reference to the embodiment shown in Figure 3, the cylindrical lens system 9 may be rotated by 90° to obtain:${\text{(f}}_{\text{2}} {\text{/f}}_{\text{1}} \text{) = 1.555} {\text{(f}}_{\text{3}} {\text{/f}}_{\text{4}} \text{) = 1/1.186 n.}$

A description will now be given of the relationship between the entering and exit beams in the case in which the cylindrical lens system 9 is rotated through 90°. Reference should be made to Figures 5(A) and 5(B).

As described above, if the tilt angle of the free liquid surface 1 is α, the incident angle of the light beam is θ, and the refractive index of the liquid is n, the reflection displacement angles of the optical axis of the reflected light beam with respect to the free liquid surface are as follows:
- ξ₁x': = 2 nα when the free liquid surface 1 is tilted around x-axis: and
- ξ₁z': = 1.286 nα when the free liquid surface 1 is tilted around z-axis.

After the light beam has passed through the cylindrical lens system 9, the reflection displacement angle ξx' is given by:${\text{ξ}}_{\text{1}} \text{x' = 2 nα x 1/1.555 = 1.286 nα}$ and the reflection displacement angle ξ₁z' is maintained after passing through the cylindrical lens system 9 as:${\text{ξ}}_{\text{1}} {\text{z' = 1.286 nα = ξ}}_{\text{1}} \text{x'}$

Further, because the angular magnification of the expander 12 is given by f₃/f₄ = 1/1.286 n as described above, one obtains the following relation:${\text{(ξ}}_{\text{1}} {\text{x' = ξ}}_{\text{1}} {\text{z') x (f}}_{\text{3}} {\text{/f}}_{\text{4}} \text{) =} \text{1.286 nα /1.286 n = α}$

As described above, the optical axis can always be maintained in the vertical direction.

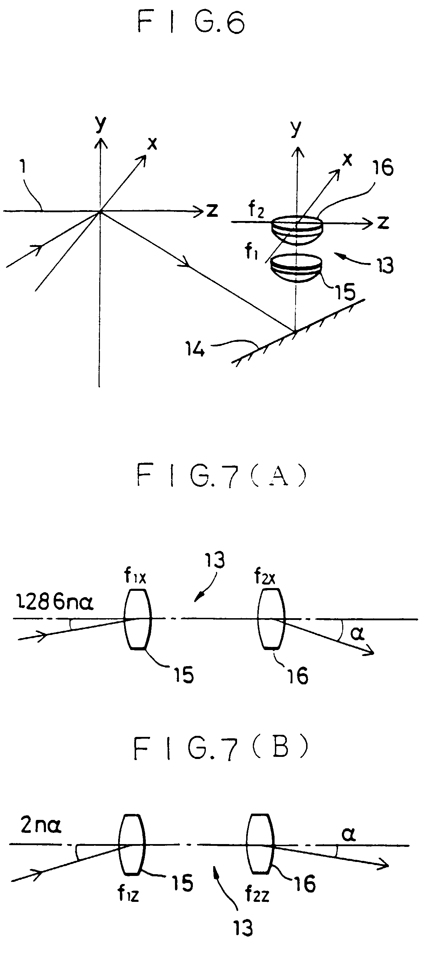

A description of a second embodiment of the present invention will now be given, with reference to Figure 6.

In this embodiment, the combination of the cylindrical lens system 9 and the beam expander 12 shown in Figure 3 is replaced by an expander 13 which comprises a set of toric lenses 15,16. These lenses have a different x-direction and y-direction focal point. Let it be assumed that the respective x-direction focal points are f₁x and f₂x, with the respective z-direction focal points being f₁z and f₂z. Further, let it be assumed that:${\text{f}}_{\text{1}} {\text{x/f}}_{\text{2}} \text{x = 1/1.286 n} {\text{f}}_{\text{1}} {\text{z/f}}_{\text{2}} \text{z = 1/2 n}$

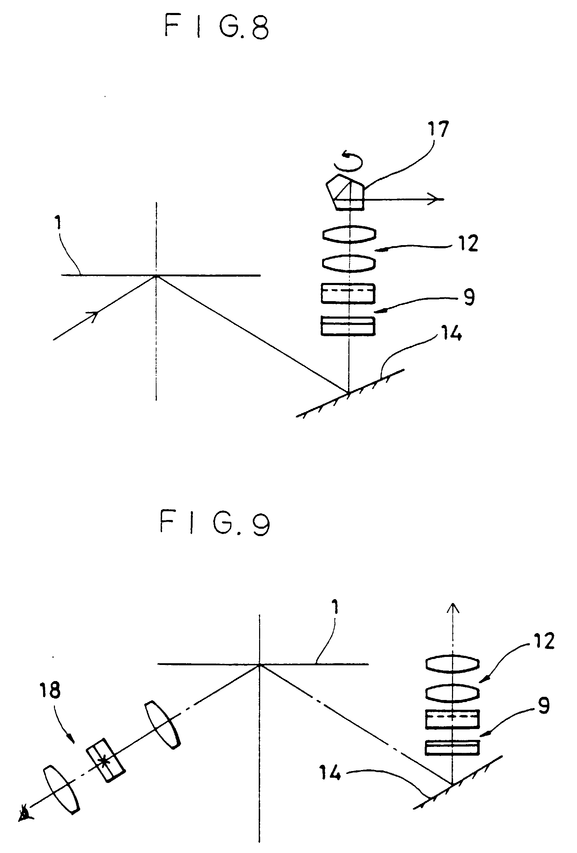

The exit angle α from the toric lens 16 may be set, as shown in Figures 7(A) and 7(B), so that the optical axis is always maintained in a vertical direction. This can be done regardless of the tilting of the reference plane, so that the exit light beam may be utilized as a vertical reference line. Further examples will now be described with reference to Figures 8 and 9.

Figure 8 shows a pentagonal prism or a pentagonal mirror 17 which is rotatably arranged along an exit optical axis of the light beam which emerges from the beam expander 12. The exit light beam is converted into a horizontal beam by the pentagonal mirror 17, and a horizontal reference plane may be formed by rotating the pentagonal mirror 17. This may allow the embodiment to be used as a levelling device.

Figure 9 shows another example. In this example, a telescope system 18 is positioned on the light source side of the first embodiment previously described with reference to Figure 3. This allows the embodiment to be used as a vertical reference device.

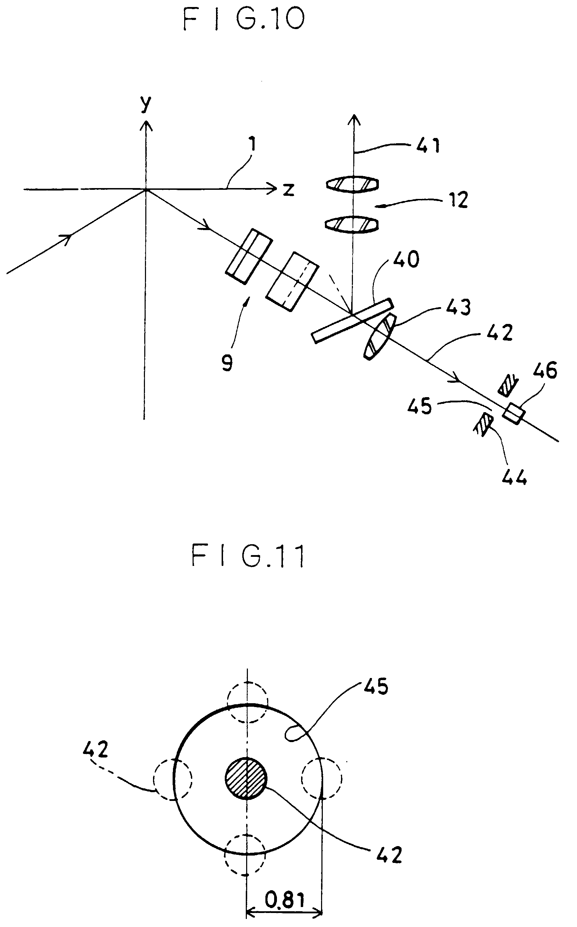

In practical embodiments, the maximum amount of tilt of the entire device is usually limited. Accordingly, it is normally necessary to detect whether the device is within the required tilt limits prior to use. This can be dealt with by making use of the arrangement shown in Figure 10.

Instead of the reflection mirror 14 described above, there is instead a half-silvered mirror 40. The reflected light beam from the free liquid surface 1 is split into a reflected light beam 41 (which is directed in a vertical direction) and a transmitted light beam 42. The transmitted light beam 42 passes through a convex lens 43, through a pinhole 45 formed on a shielding plate 44, where it is received and detected by a photodetector 46. The pinhole 45 is arranged at the focal point of the convex lens 43. The size of the pinhole corresponds to the allowable range, this will be described below.

When the entire system is tilted, the optical axis of the light beam which has been reflected from the free liquid surface 1 undergoes a deviation. Because of the cylindrical lens system 9, described above, the reflected light beam exhibits uniform sensitivity to tilt angle of the entire system in any direction. If the focal length of the convex lens 43 is given by f₀, then the optical axis moves by an amount f₀tanξ₀ on the pinhole 45 with respect to the reflection displacement angle ξ₀.

When this movement exceeds the desired tilt limit, the light moves outside the edge of the pinhole 45 so that the amount of light received by the photodetector 46 falls below a predetermined amount. It is possible to alter the maximum permitted amount of tilt by changing the diameter of the pinhole 45.

By monitoring the amount of light received by the photodetector 46, it is possible to judge whether the tilting of the entire system is within the maximum permitted value. As an example, let us assume that the incident angle θ at which the light beam impinges on the free liquid surface 1 is 50°, that the limited tilt angle α of the entire system is 10', that the refractive index n of the liquid is 1.4, that the focal length f₀ of the convex lens 43 is 100 mm, and that the pinhole diameter is R, then the deviation of the optical axis after the light beam has passed through the cylindrical lens system 9 is given by: ξ₀ = 2nα. This means that the movement of the optical axis at the pinhole (in other words at the focal point of the convex lens 43) is given by:${\text{1 = f}}_{\text{0}} {\text{tanξ}}_{\text{0}} \text{= 100 x tan x (2 x 1.4 x 10/60) = 0.81}$

As shown in Figure 11, when the pinhole 45 has an opening of this diameter, and the beam spot of the transmitted light beam 42 moves by this amount, then the amount of light received at the photodetector 46 will decrease. Accordingly, by automatically stopping the emission of light from the light source 6 when less than a minimum amount of light is detected by the photodetector 46, the user can be assured that the device will operate only within the required limits.

The pinhole 45 may be omitted, and a photodetector such as a CCD may be used as the photodetector 46. With such an arrangement, position of the beam spot may be automatically detected by the photodetector.

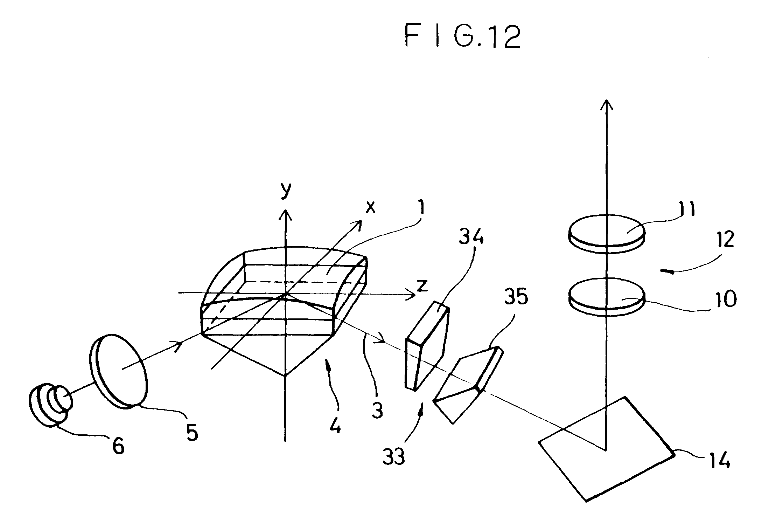

Turning now to Figure 12, there is shown a third embodiment of the present invention. The embodiment of Figure 12 uses an anamorphic prism system 33 instead of the cylindrical lens system 9 used in association with the Figure 3 embodiment.

The system shown in Figure 12 includes an anamorphic prism 33 including a pair of wedge-like prisms 34,35 so arranged along the optical axis of the reflected light beam 3.

Once the light beam has passed through the anamorphic prism system 33, it is reflected by a mirror 14 into a vertical direction. The light beam then passes through a beam expander 12, comprising convex lenses 10,11. If the focal length of the convex lens 10 is taken to be f₃ and the focal length of the convex lens 11 is taken to be f₄, then the distance between the convex lenses 10,11 is set to be equal to f₃ + f₄.

In another arrangement (not shown) the anamorphic prism system may be arranged in the optical path after the beam has been reflected by the mirror 14.

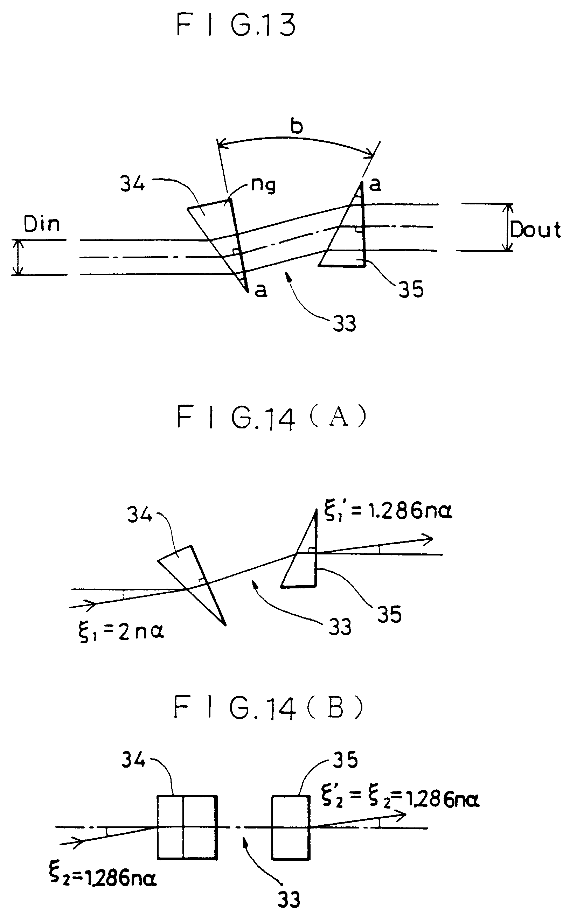

To give a specific example, let us be assumed that the incident angle θ of the impinging beam is 50°, that the tilt angle of the device (that is the angle α) is 10', and the refractive index of the liquid is 1.4. Using equation (2), obtained by referring to Figure 1, the x-axis reflection displacement angle ξ₁x' is 28', and the z-axis ξ₁z' is 18'. The ratio of the sensitivities of the reflection displacement angles is accordingly (ξ₁x'/ξ₁z') = 1.555. Under these conditions, therefore, one obtains:${\text{ξ}}_{\text{1}} \text{x' = 2 nα} {\text{ξ}}_{\text{1}} \text{z' = 1.286 nα}$ The anamorphic prism system 33 optically compensates for the differences of sensitivity, as will be described in more detail below with reference to Figures 13 and 14.

Let it be assumed that the apex angles of the wedge-like prisms 34,35 of the anamorphic prism system 33 are a₃₄ and a₃₅ respectively. Let it further be assumed that the angle between the wedge-like prisms 34,35 is b, that the refractive index is n_{g}, and that the incident and exit beams are respectively given by Dᵢₙ and Dₒᵤₜ. We then obtain:${\text{Magnification M = (D}}_{\text{in}} {\text{/D}}_{\text{out}} \text{) =} {\text{cos}}^{\text{2}} {\text{a/(1 - ng}}^{\text{2}} {\text{sin}}^{\text{2}} \text{a)}$

The angular magnification is approximately 1/M.

The prism apex angles a₃₄, a₃₅, the angle b between the prisms, and the refractive index n_{g} are selected so that the following equality applies:$\text{M = 2 nα /1.286 nα = 1.555}$

Once this has been done, then the value of ξ₁x' after the beam has passed through the anamorphic prism system 33 is converted to: 2nα x 1.286 nα/2nα = 1.286 nα. Likewise, ξ₁x' = ξ₁z' after the anamorphic prism system 33.

Exemplary values for the refractive index, the wedge-angles of the prisms and the angle between the prisms are n_{g} = 1.51, a₃₄ = a₃₅ = 27.732°, and b = 44.793°.

The optical axis of the reflected light beam 3 after passing through the anamorphic prism system 33 always has a uniform reflection displacement angle with respect to tilting of the free liquid surface 1 in any direction. Thus, whatever the tilt direction is, the reflection displacement angle always has the same sensitivity.

The light beam passes through the anamorphic prism system 33 and is reflected upward by the mirror 14, following which it passes through the beam expander 12. If the angular magnification of the beam expander 12 is 1/1.286n, the optical axis after the beam has passed through the beam expander is tilted by:${\text{(ξ}}_{\text{1}} {\text{x' = ξ}}_{\text{1}} \text{z' = 1.286nα) x 1/1.286n = α}$

The final optical axis after the beam passes through the beam expander 12 always runs perpendicularly to the free liquid surface 1, in other words the beam is always vertical. If it is assumed that the focal length of the convex lens 10 of the beam expander 12 is f₃ and the focal length of the convex lens 11 is f₄, the angular magnification of the expander 12 is given by f₃/f₄. By selecting the values of f₃ and f₄, the angular magnification can be set to 1/1.286n.

Next, in the embodiment shown in Figure 12, the anamorphic prism system 33 may be rotated by 90°, and the angles a₃₄,a₃₅, b, and the refractive index n_{g} may be selected such that the value of M is 1/1.555.

The anamorphic prism system 33 in the embodiment described above may be used to convert a beam of elliptical cross-section into a beam of circular cross-section. For example, when a laser diode is used as the light source, the cross-section of the light beam can be made closer to the desired circular shape by the anamorphic prism 33. As is well known, the natural beam shape of a laser diode is elliptical.

In general, devices used in combination with such laser diodes often have functions such as laser pointers or laser markers, where it is desirable that the cross-sectional shape of the beam is as close to circular as possible. The use of an anamorphic prism system 33 is very effective for this purpose.

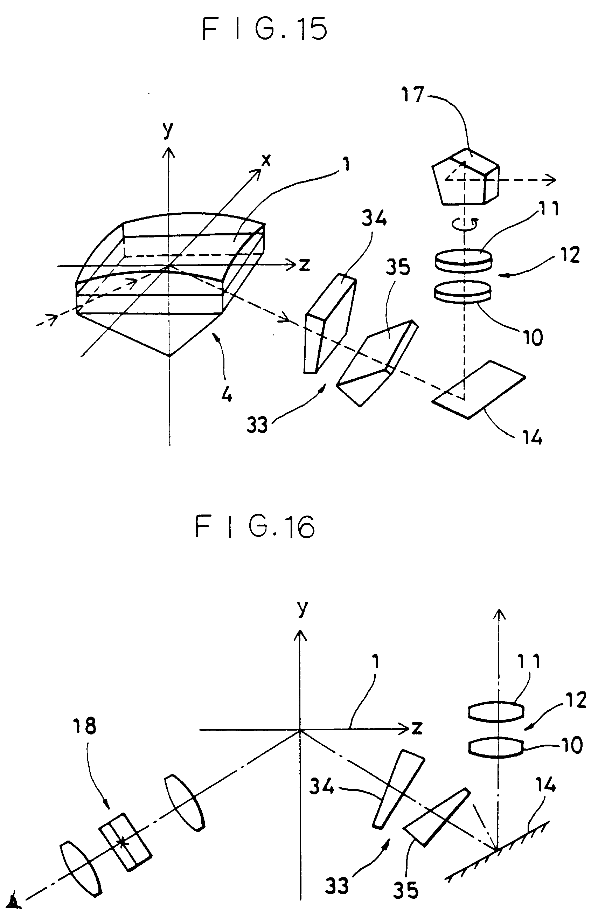

As described above, it is possible in the present embodiment always to maintain the optical axis of the exit light beam in the vertical direction. An example will now be described, with reference to Figure 15, showing the way in which the embodiment of Figure 12 can be used.

Figure 15 shows a pentagonal prism or a pentagonal mirror 17 which is rotatably arranged along the optical axis of the light beam which is emitted from the beam expander 12. The exit light beam is converted into a horizontal beam by the pentagonal mirror 17, and by rotating the pentagonal mirror 17 it is possible to form a horizontal reference plane. Specifically, this can be used in connection with a levelling device.

Figure 16 shows yet another example. In this example, a telescope 18 is arranged on the light source side of the embodiment of Figure 12. With such an arrangement, the embodiment can be utilized as a vertical device, exactly as previously described with reference to the example of Figure 9.

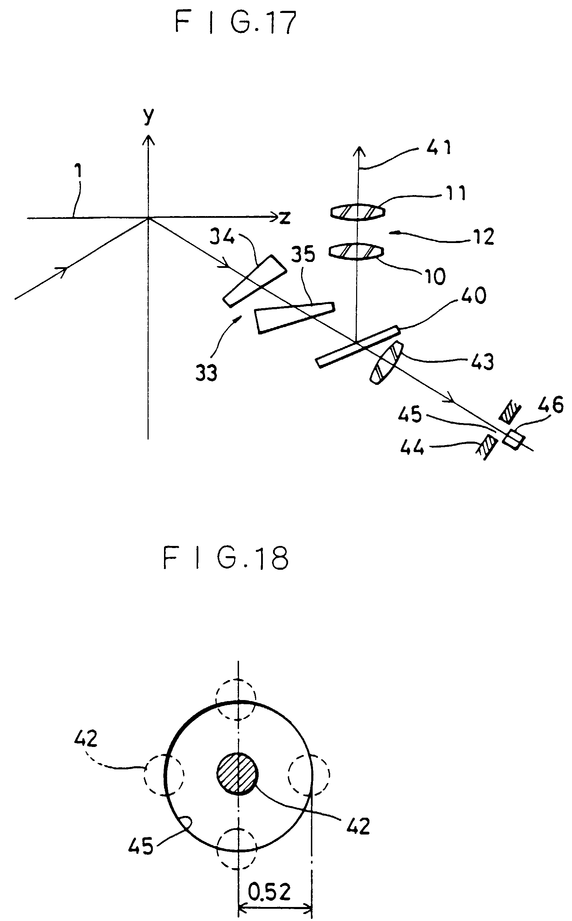

In practical systems, the maximum amount of tilt that can be tolerated is usually limited. It is accordingly necessary to ensure that the system is within the required tilting limits when it is used. To meet this necessity, the same measures may be taken as have already been described with reference to Figure 10. This will now specifically be described, with reference to Figure 17.

Instead of the mirror 14 as described above, a semi-silvered mirror 40 is used so that the reflected light beam from the free liquid surface 1 is split into a vertical reflected light beam and a further transmitted light beam 42. The transmitted light beam 42 passes through a convex lens 43 and through a pinhole 45 formed in a shielding plate 44, where it is received by a photodetector 46. The pinhole 45 is arranged at the focal point of the convex lens 43. As will be described below, the size of the pinhole determines the allowable range of tilting.

When the entire system is tilted, the optical axis of the light beam which has been reflected from the free liquid surface 1 undergoes deviation. Because of the anamorphic prism system 33 included in this system, as described above, the reflected light beam exhibits uniform sensitivity to tilt angle of the entire system in all directions. If it is assumed that the focal length of the convex lens 43 is f₀, then the amount of movement on the pinhole is given by f₀tanξ₀, with respect to the reflection displacement angle ξ₀.

The diameter of the pinhole 45 is fixed so that the amount of light falling on the photodetector 46 falls below a predetermined quantity when the tilt limit is reached. Accordingly, by monitoring the amount of light received by the photodetector 46, it is possible to judge whether the tilting of the entire system is within the required limits.

To take an example, let us assume that the angle of incidence θ with respect to the free liquid surface 1 is 50°, that the limited tilt angle α of the entire system is 10', that the refractive index n of the liquid is 1.4, that the focal length f₀ of the convex lens 43 is 100 mm, and that the pinhole diameter is R, then the deviation of the optical axis after the beam has passed through the anamorphic prism system 33 is given by: ξ₀ = 1.286nα. The movement of the beam spot at the pinhole 45 (that at the position of the focal point of the convex lens 43) is given by:${\text{1 = f}}_{\text{0}} {\text{tanξ}}_{\text{0}} \text{= 100tan(1.286x1.4x10/60) = 0.52}$

If the pinhole 45 has an opening of this diameter, then when the beam spot of the transmitted light beam 42 moves by 0.52 mm as shown in Figure 18, it falls outside the outer diameter of the pinhole and the amount of light received on the other side of the shielding plate 44 decreases. By stopping light emission from the light source 6 when a decrease in light intensity is detected at the photodetector 46, it can be ensured that the embodiment can be used only within the required tilt limits.

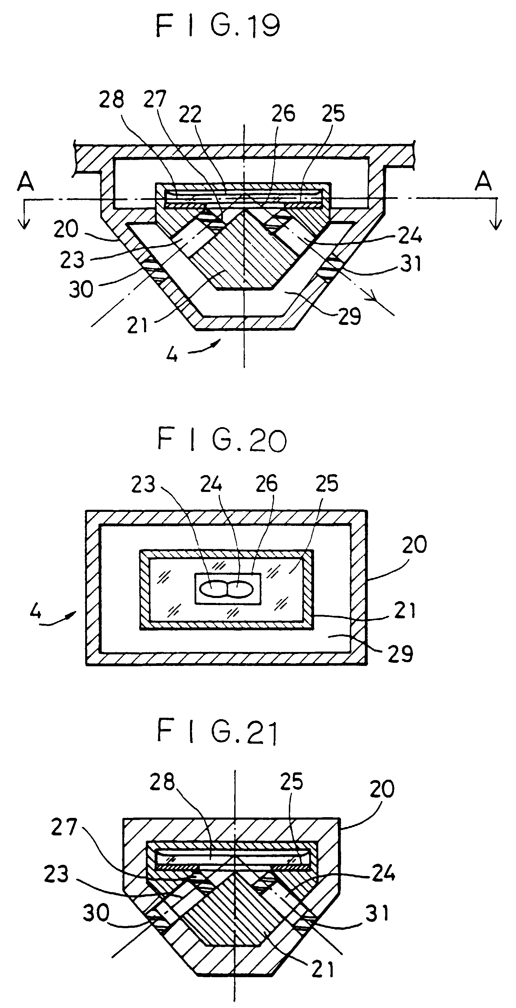

Turning now to Figures 19 and 20, a description will now be given of a practical embodiment of the container 4 having the liquid sealed within it. The container may either be fixed onto a main unit of the device, together with the optical systems, or it may be manufactured as an integral part of the device.

It may be found that if the device is used under environmental conditions where temperature changes occur (for example where the device is taken outdoors after having been allowed to warm up inside a building) a temperature distribution may occur within the liquid which is sealed within the container. This temperature distribution results in changes in refractive index within the liquid, which may cause refraction of the beams as they pass through. The specific example of the container 4 shown in Figures 19 and 20 is intended at least to alleviate such difficulties.

Inside an outer case 20 of an inverted trapezoidal shape, there is an inner case 21 of a shape similar to that of the outer case. Along an upper surface of the inner case 21 a planar space 22 is formed, along with a light entering path 23 and a light exit path 24, both communicating with the space 22. The axis of the light entering path 23 is, in use, aligned with the optical axis of the incident light beam, and the axis of the light exit path 24 is aligned with the optical axis of the reflected light beam 3 when the free liquid surface 1 is horizontal.

The bottom surface of the space 22 is defined by a heat transfer plate 25. This is provided with a window hole 26 at its centre, thereby enabling both the incident light beam and the reflective light beam to pass. On each of the upper ends of the light entering path 23 and the light exit path 24, there is a transparent glass stopper 27. A transparent liquid 28 is sealed by these stoppers 27. The amount of transparent liquid within the device is such that a free liquid surface is formed.

The inner case 21 is accommodated within the outer case 20, and there is a predetermined surrounding space 29 which is formed around the inner case 21. Glass windows 30,31 are arranged in the outer case at the positions corresponding to the axes of the light entering path 23 and the light exit path 24. The outer case 20 has an airtight construction, and the surrounding space 29 is either a vacuum, or else a gas may be sealed within it. Furthermore, the outer case 20 and the inner case 21 are both made of a material which has a low thermal conductivity such as a synthetic resin, in order to minimize heat radiation and heat absorption to and from the surroundings.

As described above, the space 22 in which the transparent liquid 28 is sealed has a thin planar shape, the bottom of which is defined by a heat transfer plate 25. As a result, heat transfer is good and the transfer plate enables the liquid to maintain a substantially uniform temperature even when temperature changes occur. The surround space 29 serves as a heat insulating layer to impede heat transfer to and from the inner case. Accordingly, the liquid will only change temperature relatively slowly even if the ambient temperature changes rapidly.

Since temperature differences within the transparent liquid 28 are suppressed, this prevents unwanted refractions of the light beams within the liquid. It also prevents the cross-sectional shape of the light beam changing within the liquid due to changes of refractive index. As a result, both measuring accuracy and stability in the face of environmental temperature changes increases.

Finally, Figure 21 shows another example of the container 4 having a sealed liquid. In this case, there is no separate surrounding space 29 around the inner case 21. Instead, the inner case 21 is directly enclosed by the outer case 20, which is made of a heat-insulating material. The outer case accordingly acts as an insulating layer around the inner case.

It goes without saying that the exact shape of the container 4, enclosing the sealed liquid, is not limited to the above examples.

As described above, automatic tilt angle compensation according to any one of the described embodiments may be useful either as a levelling device or as a device for determining verticality. In addition, it may be useful for measuring the tilt of a device, for example within a surveying instrument. It may also be used to compensate for a tilt angle.

## Claims

1. An automatic tilt angle compensator, comprising a container (4) having within it a transparent liquid (1) having a free liquid surface, light projection means (6) for projecting an incident light beam along an incident axis towards the free liquid surface so that the light beam is totally reflected therefrom along a reflected axis; and an optical system (9,12,33) arranged in the optical path of the reflected beam; the compensator being characterised in that the optical system (9,12,33) acts on the reflective beam differentially in mutually perpendicular directions to substantially equalise the sensitivity of the reflected beam, measured by amount of angular deviation from the reflected axis, to a small angular deviation of the incident light beam in any direction from the incident axis.

2. A compensator as claimed in Claim 1 in which the optical system comprises a convex cylindrical lens (7) and a concave cylindrical lens (8).

3. A compensator as claimed in Claim 1 in which the optical system comprises an anamorphic prism system (33).

4. A compensator as claimed in any one of the preceding claims including a mirror (14) for reflecting the reflected light beam in a reference direction, and means for adjusting the direction of the reflected beam to the reference axis following an angular deviation of the incident light beam from the incident axis.

5. A compensator as claimed in any one of the preceding claims when dependent upon Claim 2, in which the optical system further includes a beam expander (10,11).

6. A compensator as claimed in any one of the preceding claims in which the optical system includes a set of toric lenses.

7. A compensator as claimed in any one of the preceding claims when dependent upon Claim 3 in which the optical system includes a beam expander (12).

8. A compensator as claimed in any one of the preceding claims including converting means in the optical path of the reflected beam arranged to direct the light beam in a horizontal direction.

9. A compensator as claimed in any one of the preceding claims including a telescope system (18) arranged within the incident light beam.

10. A compensator as claimed in any one of the preceding claims including beam splitting means, arranged to split the reflected beam into a first beam which is received by a photodetector and a second beam, movement of an optical axis of the first beam being detected by the photodetector.

11. A compensator as claimed in any one of the preceding claims in which the transparent liquid is sealed in a space of planar shape.

12. A compensator as claimed in Claim 11 in which one face of the planar shape is defined by a heat transfer plate (25).

13. A compensator as claimed in any one of the preceding claims including heat insulation means surrounding the container (4) .

## Patentansprüche

1. Automatischer Neigungswinkelkompensator mit einem Behälter (4), in dem eine transparente Flüssigkeit (1) mit einer freien Flüssigkeitsoberfläche vorliegt, mit einer Lichtprojektionseinrichtung (6) zum Projizieren eines einfallenden Lichtstrahls entlang einer einfallenden Achse zur freien Flüssigkeitsoberfläche, so daß der Lichtstrahl von dieser entlang einer zurückgeworfenen Achse totalreflektiert wird, und mit einem optischen System (9, 12, 33), das im optischen Weg des reflektierten Strahls angeordnet ist, wobei der Kompensator **dadurch gekennzeichnet** ist, daß das optische System (9, 12, 33) auf den Reflexionsstrahl in zueinander senkrechten Richtungen unterschiedlich wirkt, um die Empfindlichkeit des reflektierten Strahls im wesentlichen auszugleichen, die durch die Größe der Winkelabweichung von der zurückgeworfenen Achse gegen eine kleine Winkelabweichung des einfallenden Lichtstrahls in irgendeine Richtung von der einfallenden Achse gemessen wird.

2. Kompensator nach Anspruch 1, bei dem das optische System eine konvexe Zylinderlinse (7) und eine konkave Zylinderlinse (8) aufweist.

3. Kompensator nach Anspruch 1, bei dem das optische System ein anamorphotisches Prismensystem (33) aufweist.

4. Kompensator nach irgendeinem der vorhergehenden Ansprüche, mit einem Spiegel (14) zum Reflektieren des reflektierten Lichtstrahls in eine Bezugsrichtung und mit einer Einrichtung zum Anpassen der Richtung des reflektierten Lichtstrahls an die Bezugsachse, das einer Winkelabweichung des einfallenden Lichtstrahls von der einfallenden Achse folgt.

5. Kompensator nach irgendeinem der vorherigen Ansprüche, sofem von Anspruch 2 abhängig, bei dem das optische System femer einen Strahlaufweiter (10, 11) aufweist.

6. Kompensator nach irgendeinem der vorhergehenden Ansprüche, bei dem das optische System einen Satz torischer Linsen aufweist.

7. Kompensator nach irgendeinem der vorhergehenden Ansprüche, sofem von Anspruch 3 abhängig, bei dem das optische System einen Strahlaufweiter (12) aufweist.

8. Kompensator nach irgendeinem der vorhergehenden Ansprüche, der eine Konversionseinrichtung im optischen Weg des reflektierten Strahls aufweist, die zum Richten des Lichtstrahls in eine horizontale Richtung geeignet angeordnet ist.

9. Kompensator nach irgendeinem der vorhergehenden Ansprüche, mit einem Teleskopsystem (18), das in dem einfallenden Lichtstrahl angeordnet ist.

10. Kompensator nach irgendeinem der vorhergehenden Ansprüche, mit einer Strahlaufteileinrichtung, die zum Aufteilen des reflektierten Strahls in einen ersten Strahl, der von einem Photodetektor empfangen wird, und in einen zweiten Strahl eingerichtet ist, wobei eine Bewegung der optischen Achse des ersten Strahls durch den Photodetektor erfaßt wird.

11. Kompensator nach irgendeinem der vorhergehenden Ansprüche, bei dem die transparente Flüssigkeit in einem Raum ebener Gestaltung eingeschlossen ist.

12. Kompensator nach Anspruch 11, bei dem eine Fläche der ebenen Gestaltung durch eine Wärmeübertragungsplatte (25) bestimmt ist.

13. Kompensator nach irgendeinem der vorhergehenden Ansprüche, mit einer den Behälter (4) umgebenden Wärmeisoliereinrichtung.

## Revendications

1. Un compensateur automatique d'angle d'inclinaison, comprenant un récipient (4) qui contient un liquide transparent (1) comportant une surface libre de liquide, un moyen de projection (6) de lumière pour projeter vers la surface libre du liquide un faisceau de lumière incidente le long d'un axe d'incidence de façon que le faisceau lumineux soit totalement réfléchi à partir de la surface le long d'un axe de réflexion; et un système optique (9, 12, 33) agencé dans le trajet optique du faisceau réfléchi; le compensateur étant caractérisé en ce que le système optique (9, 12, 33) agit sur le faisceau réfléchi de façon différentielle dans des directions perpendiculaires entre elles de manière à égaliser sensiblement la sensibilité du faisceau réfléchi, mesurée par l'ampleur de la déviation angulaire par rapport à l'axe de réflexion, à une faible déviation angulaire du faisceau lumineux incident dans une direction quelconque par rappprt à l'axe d'incidence.

2. Un compensateur selon la revendication 1, dans lequel le système optique comprend une lentille cylindrique convexe (7) et une lentille cylindrique concave (8).

3. Un compensateur selon la revendication 1 dans lequel le système optique comprend un système de prisme anamorphosique (33).

4. Un compensateur selon l'une quelconque des revendications précédentes qui inclut un miroir (14) pour réfléchir le faisceau lumineux réfléchi dans une direction de référence, et un moyen d'ajustement de la direction du faisceau réfléchi à l'axe de référence à la suite d'une déviation angulaire du faisceau lumineux incident à partir de l'axe d'incidence.

5. Un compensateur selon l'une quelconque des revendications précédentes lorsqu'elle dépend de la revendication 2, dans lequel le système optique inclut en outre un expanseur (10, 11) de faisceau.

6. Un compensateur selon l'une quelconque des revendications précédentes dans lequel le système optique comprend un ensemble de lentilles toriques.

7. Un compensateur selon l'une quelconque des revendications précédentes lorsqu'elle dépend de la revendication 3 dans lequel le système optique comprend en outre un expanseur (12) de faisceau.

8. Un compensateur selon l'une quelconque des revendications précédentes qui inclut dans le trajet optique du faisceau réfléchi un moyen de conversion agencé de manière à diriger le faisceau lumineux dans une direction horizontale.

9. Un compensateur selon l'une quelconque des revendications précédentes qui inclut un système de télescope (18) agencé à l'intérieur du faisceau lumineux incident.

10. Un compensateur selon l'une quelconque des revendications précédentes qui inclut un moyen diviseur de faisceau agencé de manière à diviser le faisceau en un premier faisceau qui est reçu par un photo-détecteur et un deuxième faisceau, un déplacement d'un axe optique du premier faisceau étant détecté par le photo-détecteur.

11. Un compensateur selon l'une quelconque des revendications précédentes dans lequel le liquide transparent est scellé dans un espace de configuration plane.

12. Un compensateur selon la revendication 11 dans lequel l'une des faces de la configuration plane est définie par une plaque de transfert thermique (25).

13. Un compensateur selon l'une quelconque des revendications précédentes qui inclut un moyen isolant qui entoure le récipient (4).
